# EUROPEAN PATENT APPLICATION

(11) **EP 4 704 053 A1**
(43) Date of publication of application: **04.03.2026**
(21) Application number: 24207416.9
(22) Date of filing: 18.10.2024
(51) Int. Cl.: G06V 30/19, G06V 30/413, G06V 30/414, G06V 30/422

(54) **RASTER RETRAINING DECISION SYSTEM**

(30) Priority: 29.08.2024 IN 202411065182
(71) Applicant: Services Pétroliers Schlumberger, 75007 Paris (FR); GeoQuest Systems B.V., 2514 JG The Hague (NL)
(72) Inventor: SHRIVASTAVA, Ritik, 411006 Pune (IN); GUNE, Omkar Anil, 411006 Pune (IN); MANGSULI, Purnaprajna Raghavendra, 411006 Pune (IN)
(74) Representative: Schlumberger Intellectual Property Department

(57) **Abstract**

A method implements a raster retraining decision system. The method includes executing a raster segmentation model for a first stage to generate multiple masks including a first header mask. The method further includes executing a header mask segmentation model for a second stage to generate a second header mask. The method further includes executing a segment comparison model using the first header mask with the second header mask to generate a comparison score. The method further includes generating a raster retraining score from the comparison score for the raster segmentation model of a raster digitization engine. The method further includes retraining the raster segmentation model using the raster retraining score.

## Description

### BACKGROUND

Workflows utilizing deep learning are used to address real world problems. Depending upon the nature of the problem to be addressed, the workflows may contain one or more modules that involve machine learning models executing in cascade or in parallel. Machine learning models are mathematical models that may utilize machine learning and deep learning algorithms and techniques. While the workflows provide robust performance when training data and test data are similar in distribution, a performance drop may be observed when training and testing data distributions differ. In latter case, fine-tuning or model retraining may be used to improve the overall performance of the workflow. However, in many cases, when a workflow is deployed in production, a challenge may exist as to identifying when to finetune or retrain one or more of the machine learning models of the workflow, since the data distribution shift from training to testing may be non-trivial. Efforts may be further frustrated due to data privacy and residency issues. For a workflow with multiple machine learning models, a challenge may exist to determine and select the individual model to be finetuned or retrained.

### SUMMARY

In general, in one or more aspects, the disclosure relates to a method implementing a raster retraining decision system. The method includes executing a raster segmentation model for a first stage to generate multiple masks including a first header mask. The method further includes executing a header mask segmentation model for a second stage to generate a second header mask. The method further includes executing a segment comparison model using the first header mask with the second header mask to generate a comparison score. The method further includes generating a raster retraining score from the comparison score for the raster segmentation model of a raster digitization engine. The method further includes retraining the raster segmentation model using the raster retraining score.

In general, in one or more aspects, the disclosure relates to a system that includes at least one processor and an application that executes on the at least one processor. Executing the application performs executing a raster segmentation model for a first stage to generate multiple masks including a first header mask. Executing the application performs executing a header mask segmentation model for a second stage to generate a second header mask. Executing the application performs executing a segment comparison model using the first header mask with the second header mask to generate a comparison score. Executing the application performs generating a raster retraining score from the comparison score for the raster segmentation model of a raster digitization engine. Executing the application performs retraining the raster segmentation model using the raster retraining score.

In general, in one or more aspects, the disclosure relates to a non-transitory computer readable medium including instructions executable by at least one processor. Executing the instructions performs executing a raster segmentation model for a first stage to generate multiple masks including a first header mask. Executing the instructions performs executing a header mask segmentation model for a second stage to generate a second header mask. Executing the instructions performs executing a segment comparison model using the first header mask with the second header mask to generate a comparison score. Executing the instructions performs generating a raster retraining score from the comparison score for the raster segmentation model of a raster digitization engine. Executing the instructions performs retraining the raster segmentation model using the raster retraining score.

Other aspects of one or more embodiments may be apparent from the following description and the appended claims.

### BRIEF DESCRIPTION OF DRAWINGS

FIG. 1 and FIG. 2 show systems in accordance with one or more embodiments of the disclosure.
FIG. 3 shows a flowchart in accordance with one or more embodiments of the disclosure.
FIG. 4, FIG. 5, FIG. 6, FIG. 7, FIG. 8, FIG. 9, FIG. 10, and FIG. 11 show examples in accordance with one or more embodiments of the disclosure.
FIG. 12A and FIG. 12B show computing systems in accordance with one or more embodiments.

Similar elements in the various figures may be denoted by similar names and reference numerals. The features and elements described in one figure may extend to similarly named features and elements in different figures.

### DETAILED DESCRIPTION

Embodiments of the disclosure determine when to retrain raster digitization components, which may include fine-tuning the raster digitization components. The decision for retraining the raster digitization components may be performed automatically using the inputs and outputs to the raster digitization components. Calculating and executing retraining decisions improves the functioning of computer systems and machine learning models by reducing the amount computational resources utilized by computer systems and by increasing the accuracy of the machine learning models being used.

The raster digitization components perform raster digitization, which is the process of converting raster images (which are composed of pixels, such as scanned maps, satellite images, photographs, well logs, *etc.)* into data points. For example, raster digitization may convert a curve of measurement data into points that may be stored in a tabular format. Raster digitization may be performed to enable the manipulation, analysis, and integration with other data in geographic information systems (GIS).

In an embodiment, the raster retraining decision model processes a document with a raster segmentation model to generate multiple types of masks, including a header mask, as well as a track area mask, and a depth track mask. The document is also processed with a header mask segmentation model. The header mask output from the header mask segmentation model is compared with the header mask output from the raster segmentation model to generate a raster retraining score. The raster retraining score may then be used to determine whether to retrain the raster segmentation model.

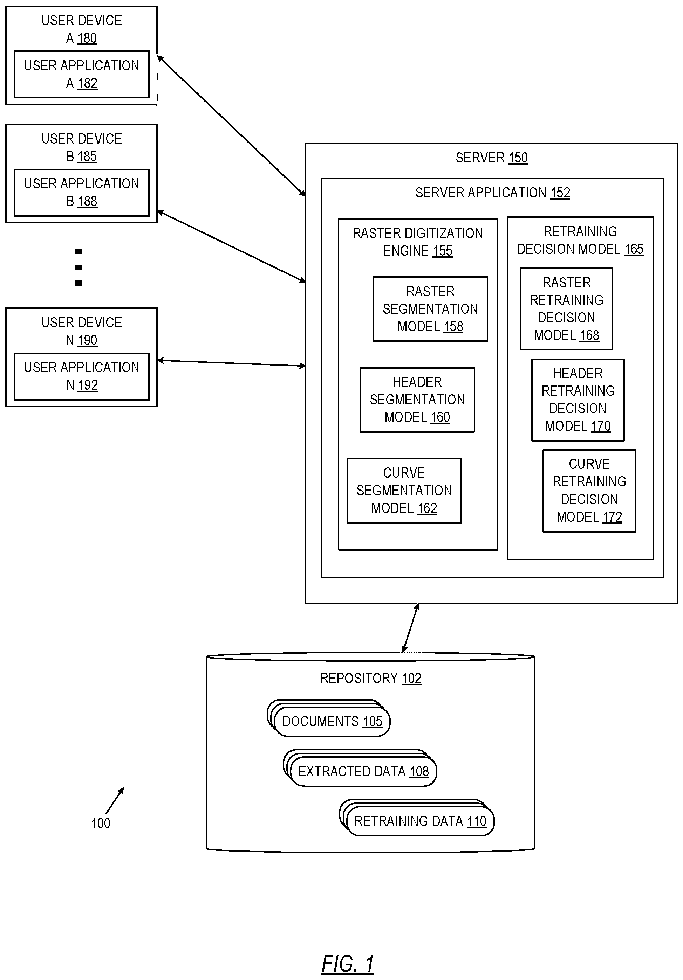

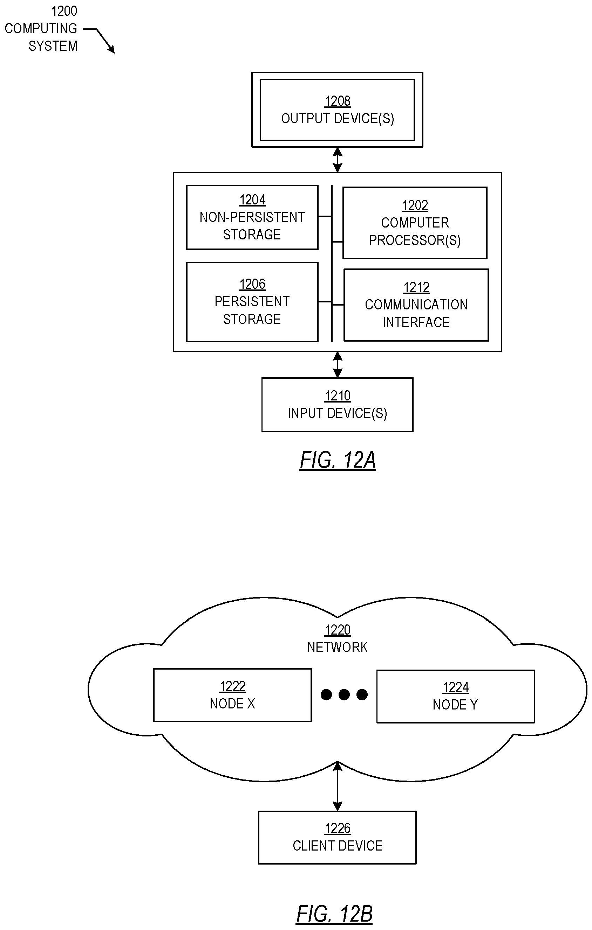

Turning to FIG. 1, the system (100) is a computing system that operates to determine when to retrain components of the raster digitization engine (95). The components of the system (100) may each include one or more processors and one or more memories with data and instructions in accordance with the computing systems described in FIG. 12A and FIG. 12B. The system (100) includes the server (90) that communicates with the repository (102) and the user devices A (180) and B (185) through N (190).

The repository (102) is a collection of storage devices *(e.g.,* file systems, databases, data structures, *etc.)* that store and maintain the data used by the system (100). The repository (102) may include multiple different, potentially heterogenous, storage devices. The repository (102) stores data utilized by other components of the system (100). The data stored by the repository (102) includes the documents (105), the extracted data (108), and the retraining data (110).

The documents (105) are collections of data that are processed by the system (100). Each of the documents (105) may include multiple segments with different types of information in each of the segments. Different methods and algorithms may be used to extract the information from the different segments. As an example, a document may include a header segment and a curve segment. The header segment may include metadata information about a well and the type of data captured in the document. In an embodiment, information in a header segment may include parameters that identify the type of information captured within the curve segment (e.g., the properties measured and units used) and may provide information about the well from which the information was captured, including location data, date, time, satellite system coordinates, formation name, *etc.* The curve segment may include a record of physical properties of the well.

Each of the documents, and the sequence thereof, maybe converted to one or more images for processing by the system 100. In the present application, an image is the same as used in the art of computer science to refer to an array of pixels, whereby each pixel has a corresponding greyscale or color value. The images created from the documents 105 may include header images and curve images. A header image is an image from the header portion of a document. A curve image is an image from the portion of the document having a curve.

An image for a document may further be split into image tiles for processing by the models of the system (100). As an example, a document may be converted to an image with a resolution of 700 by 900 pixels and a model for processing the image may operate on images with a resolution of 300 by 300. The 700 by 900 image may be extended to an image that is 900 by 900. The pixels added in the extended image may be black. The extended 900 by 900 image may then be split into nine 300 by 300 images that are suitable for the model to process. Different resolutions may be used.

In an embodiment, the documents (105) may be well logs and include records of geological formations penetrated by a borehole. Well logs may include measurements of the physical properties of the rock and fluids encountered during the drilling process. Well logs may contain various types of information, including lithology, porosity, permeability, fluid content, resistivity, density, neutron porosity, gamma ray activity, acoustic properties, temperature, pressure, borehole diameter, fluid identification, formation dip and strike, mechanical properties, gas content, formation boundaries, cuttings analysis, mud properties, casing and cementing details, *etc.*

The extracted data (108) are collections of information that is extracted from the documents (105). The extracted data (108) may be extracted from the documents (105) by the raster digitization engine (155). The extracted data (108) may include data from the documents (105) that has been reformatted for other programs to process and use. For example, the extracted data (108) may include tabular data that corresponds to information extracted from an image of one of the documents (105).

The retraining data (110) are collections of information used to retrain the machine learning models utilized by the raster digitization engine (155). For example, the retraining data (110) may include retraining scores determined by the components of the retraining decision model (165) for the components of the raster digitization engine (155).

The server (150) is a collection of one or more computing systems that communicate with the repository (102) and the user devices A (180) through N (190). The server (150) may be operated to execute the server application (152) to process the documents (105) with the raster digitization engine (155) and to decide whether the models of the raster digitization engine (155) need retraining with the retraining decision model (165).

The server application (152) is a component of the server (150). The server application (152) includes the raster digitization engine (155) and the retraining decision model (165).

The raster digitization engine (155) is a component of the server application (152). The raster digitization engine (155) may be executed to process the documents (105) and generate the extracted data (108). The raster digitization engine (155) performs the extraction of the extracted data (108) using one or more machine learning models, which may include the raster segmentation model (158), the header segmentation model (160), and the curve segmentation model (162).

Each of the models utilized within the system (100) may include one or more machine learning models. The machine learning models used by the system (100) may include neural networks and may operate using one or more layers of weights that may be sequentially applied to sets of input data, which may be referred to as input vectors. For each layer of a machine learning model, the weights of the layer may be multiplied by the input vector to generate a collection of products, which may then be summed to generate an output for the layer that may be fed, as input data, to a next layer within the machine learning model. The output of the machine learning model may be the output generated from the last layer within the machine learning model. Multiple machine learning models may operate sequentially or in parallel. The output may be a vector or scalar value. The layers within the machine learning model may be different and correspond to different types of models. As an example, the layers may include layers for recurrent neural networks, convolutional neural networks, transformer models, attention layers, perceptron models, *etc.* Perceptron models may include one or more fully connected (also referred to as linear) layers that may convert between the different dimensions used by the inputs and the outputs of a model. Different types of machine learning algorithms may be used, including regression, decision trees, random forests, support vector machines, clustering, classifiers, principal component analysis, gradient boosting, *etc.*

The machine learning models may be trained (or retrained) by inputting training data to a machine learning model to generate training outputs that are compared to expected outputs. For supervised training, the expected outputs may be labels associated with a given input. For unsupervised learning, the expected outputs may be previous outputs from the machine learning model. The difference between the training output and the expected output may be processed with a loss function to identify updates to the weights of the layers of the model. After training on a batch of inputs, the updates identified by the loss function may be applied to the machine learning model to generate a trained machine learning model. Different algorithms may be used to calculate and apply the updates to the machine learning model, including back propagation, gradient descent, *etc.*

The raster segmentation model (158) is a component of the raster digitization engine (155). The raster segmentation model (158) processes the documents (105) to generate masks that identify the segments within the documents (105). In an embodiment, each individual mask may correspond to an individual segment of the multiple segments within a document. The raster segmentation model (158) may output multiple different masks that relate to different types of data and segments within the documents (105).

A mask is an array of data that corresponds to the arrays of pixels of the images generated from the documents (105). In an embodiment, the values in the array of data for a mask may be binary values that identify whether a corresponding pixel from an image (the mask and image having similar array dimensions) is part of a segment. For example, for each corresponding pixel, a header mask may include a value of 0 to indicate that the pixel is not part of the header and include a value of 1 to indicate that the pixel is a part of a header segment of the document.

The header segmentation model (160) is a component of the raster digitization engine (155). The header segmentation model (160) may use output from the raster segmentation model (158) to process the documents (105) to identify the header segments within the documents (105), from which the header data within the documents (105) may be extracted to form at least a portion of the extracted data (108). The header data is data in the header (*i*.*e.,* the header segment, described above). The output of the header segmentation model (160) may be a header mask that identifies the location of a header within one of the documents (105).

The curve segmentation model (162) is a component of the raster digitization engine (155). The curve segmentation model (162) may use output from the raster segmentation model (158) (*i.e.,* the track area mask from the raster segmentation model (158)) to process the documents (105) and generate a portion of the extracted data (108). The curve segmentation model (162) may extract the curve information from one of the documents (105) that is output to a tabular format within the extracted data (108). The curve information is data from the curve in the curve segment, described above).

The retraining decision model (165) is a component of the server application (152). The retraining decision model (165) generates the retraining data (110), which is used to determine when the raster segmentation model (158), the header segmentation model (160), and the curve segmentation model (162) are to be retrained. The retraining decisions for the models of the raster digitization engine (155) are performed independently. The retraining decision model (165) includes the raster retraining decision model (168), the header retraining decision model (170), and the curve retraining decision model (172).

The raster retraining decision model (168) is a component of the retraining decision model (165). The raster retraining decision model (168) generates raster retraining scores for the raster segmentation model (158) from the inputs and outputs of the raster segmentation model (158). The raster retraining score may be a numerical score used to determine whether to retrain a component of the raster segmentation model (158). The raster retraining decision model (168) may trigger the retraining of the raster segmentation model (158) based on the raster retraining score.

The header retraining decision model (170) is a component of the retraining decision model (165). The header retraining decision model (170) generates the header retraining scores for the header segmentation model (160) from the inputs and outputs of the header segmentation model (160). The header retraining decision model (170) may trigger the retraining of the header segmentation model (160) based on the header retraining score.

The curve retraining decision model (172) is a component of the retraining decision model (165). The curve retraining decision model (172) generates the curve retraining score of the retraining data (110), for the curve segmentation model (162). Responsive to the curve retraining scores, the curve retraining decision model (172) may trigger the retraining of the curve segmentation model (162).

Continuing with FIG. 1, the user devices A (180) and B (185) through N (190) may interact with the server (150). The user devices A (180) and B (185) through N (190) may be computing systems in accordance with FIG. 12A and FIG. 12B. The devices A (180) and B (185) through N (190) may include and execute the user applications A (182) and B (188) through N (192).

The user applications A (182) and B (188) through N (192) are programs that operate on the user devices A (180) and B (185) through N (190) to provide user interaction by collecting user inputs and displaying outputs in response to the user inputs. The user applications A (182) and B (188) through N (192) may include user interfaces with user interface elements to receive inputs and display outputs to the users of the system (100).

In an embodiment, the user device A (180) is operated by a user to extract data from the documents (105). For example, the user may utilize a user interface to identify one or more of the documents (105) to be processed with the raster digitization engine (155) and generate the extracted data (108). In an embodiment, the user device N (190) may be operated by a developer of the system to trigger retraining of one or more of the models of the raster digitization engine (155). For example, a developer may set up a periodic process to execute the retraining decision model (165) on the inputs and outputs to the raster digitization engine (155) to determine which, if any, of the raster segmentation model (158), the header segmentation (160), and the curve segmentation model (162) are to be retrained.

Although described within the context of a client server environment with servers and user devices, aspects of the disclosure may be practiced with a single computing system and application. For example, a monolithic application may operate on a computing system to perform the same functions as one or more of the applications executed by the servers (152) and the user devices A (180) and B (185) through N (190).

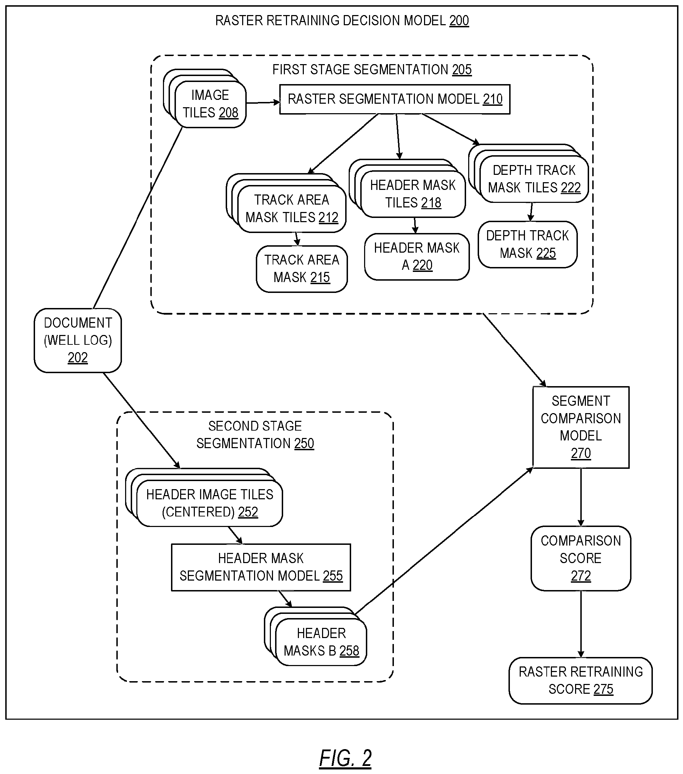

Turning to FIG. 2, the raster retraining decision model (200) is a component of a computing system. Items in FIG. 2 that have the same name of items in FIG. 1 are examples of the like named item in FIG. 1. The raster retraining decision model (200) may be an embodiment of the raster retraining decision model (168) of FIG. 1. The raster retraining decision model (200) processes information to determine the raster retraining score (275), which may be used to identify when the raster segmentation model (210) is to be retrained. In an embodiment, the decision to retrain may be applied to both the raster segmentation model (210) and to the header mask segmentation model (255). The raster retraining decision model (200) utilizes the first stage segmentation (205) and the second stage segmentation (250) to process the document (202) and generate the raster retraining score (275).

The document (202) is a document that may be processed with the raster retraining decision model (200) to generate the information to generate the raster retraining score (275), which may be used to identify when one or both of the raster segmentation model (210) and the header mask segmentation model (255) are to be retrained.

The document (202) is a document that may be processed with the raster retraining decision model (200) to generate the information to generate the raster retraining score (275). The document (202) may be a wells log with multiple headers, plots, and tracts formed as segments within the document (202).

The first stage segmentation (205) is a first workflow within the raster retraining decision model (200). The first stage segmentation (205) uses the raster segmentation model (210) to generate multiple classes of masks, including at least the header mask A (220).

The image tiles (208) are images generated by splitting up the document (202). The document (202) may be split up when the dimensions (e.g., the number of pixels) of an image generated from the document (202) is not suitable for the raster segmentation model (210). The document (202) may be split into the image tiles (208), which are of a size that may be utilized by the raster segmentation model (210).

The raster segmentation model (210) is a component of the raster retraining decision model (200). The raster segmentation model (210) includes data with instructions to process the image tiles (208) and generate the track area mask (215) (stitched together from the track area mask tiles (212)), the header mask A (220) (stitched together from the header mask tiles (218)), and the depth track mask (225) (stitched together from the depth track mask tiles (222)). The output from the raster segmentation model (210) may have the same dimensionality as the input to the raster segmentation model (210) *(i.e.,* the image tiles (208)). The intermediate outputs (the track area mask tiles (212), the header mask tiles (218), and the depth track mask tiles (222)) from the raster segmentation model (210) generated from the input tiles (the images tiles (208)) may be stitched together to form the outputs of the raster segmentation model (210) (the track area mask (215), the header mask A (220), and the depth track mask (225)) that correspond to the document (202). The value in the pixels of the masks may identify whether a segment is present at the location of the pixel. The raster segmentation model (210) may be a machine learning model, which may include a neural network model, a convolutional neural network model, a transformer model, a recurrent neural network model, *etc.*

The track area mask tiles (212) are intermediate outputs from the raster segmentation model (210) The track area mask tiles (212) correspond to the image tiles (208) to identify track segments of the image tiles (208). The track area mask tiles (212) are combined to form the track area mask (215). The track area mask (215) is a mask that identifies the location of a track within the document (202).

The header mask tiles (218) are intermediate outputs from the raster segmentation model (210). The header mask tiles (218) correspond to the image tiles (208) and identify one or more header segments within the image tiles (208). The header mask tiles (218) may be combined to form the header mask A (220).

The header mask A (220) identifies one or more headers in the document (202). The header mask A (220) may be an input to the segment comparison model (270).

The depth track mask tiles (222) are intermediate outputs from the raster segmentation model (210). The depth track mask tiles (222) correspond to the image tiles (208) and identify a depth track area in the image tiles (208). The depth track area provides information about a depth measurement and may be a narrow vertical strip containing depth values. The depth track mask tiles (222) may be combined to form the depth track mask (225). The depth track mask (225) identifies the location of depth values for curve track area within the document (202).

The second stage segmentation (250) is a second workflow of the raster retraining decision model (200). The second stage segmentation model (250) processes the document (202) using the header mask segmentation model (255) to generate the header masks B (258).

The header image tiles (252) are collections of data stored in a component of the raster retraining decision model (200). The header image tiles (252) are images from the document (202) that include header segments as identified by the header mask A (220). The header image tiles (252) may be centered with respect to the location of the header within the header image tiles (252). A set of header image tiles may be generated for each header segment identified within the header mask A (220). The header image tiles within the set may be partially offset from each other. For example, a first header image tile may be above center *(e.g.,* by 10% or a number of pixels), a second header image tile may be centered, and a third image tile may be below center (e.g., by a percentage or certain number of pixels). Different numbers of header image tiles may be used. The header image tiles (252) may be individually input to the header mask segmentation model (255).

The header mask segmentation model (255) is a component of the raster retraining decision model (200). The header mask segmentation model (255) processes the header image tiles (252) to generate the header masks B (258). The header mask segmentation model (255) may be a machine learning model, which may include a neural network model, a convolutional neural network model, a transformer model, a recurrent neural network model, *etc.*

The header masks B (258) are collections of data stored within a component of the raster retraining decision model (200). The header masks B (258) identify the location of headers within the header image tiles (252). The header masks B (258) may be input to the segment comparison model (270).

The segment comparison model (270) is a component of the raster retraining decision model (200). The segment comparison model (270) compares the header mask A (220) with the header masks B (258) to generate the comparison score (272). The segment comparison model (270) may align the header masks B (258) with the header mask A (220), determine the intersection over union between each of the header masks B (258) with the header mask A (220) and then combine the values for the intersections over unions. In an embodiment, the combination may be an average of the intersection over union values. The average may be compared to a threshold which may form the comparisons score (272). In an embodiment, the threshold may be 0.93 on a scale of 0 to 1. Other thresholds and scales may be used.

The comparison score is a collection of data stored on a component of the raster retraining decision model (200). The comparison score identifies whether the document (202) has been properly segmented with respect to the headers within the document (202). The comparison score (272) is for one sample (e.g., the document (202)) of a data set used to determine if the raster segmentation model (210) should be retrained.

The raster retraining score (275) is a collection of data stored on a component of the raster retraining decision model (200). The raster retraining score (275) may be generated from a collection of comparison scores that include the comparison score (272). The raster retraining score (275) may be a score for a data set of samples including the document (202), used to determine whether to trigger a retraining of the raster segmentation model which may include the raster segmentation model (210) and the header mask segmentation model (255).

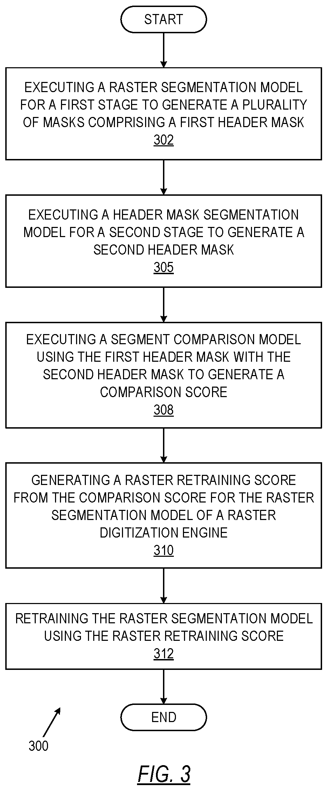

FIG. 3 shows a flowchart of methods for determining when to retrain raster digitization components. The method of FIG. 3 may be implemented using the systems and components of FIG. 1 and FIG. 2, and one or more of the steps may be performed on, or received at, one or more computer processors. In an embodiment, a system may include at least one processor and an application that, when executing on the at least one processor, performs the method. In an embodiment, a non-transitory computer readable medium may include instructions that, when executed by one or more processors, perform the method. The outputs from various components (including models, functions, procedures, programs, processors, *etc.*) from performing the method may be generated by applying a transformation to inputs using the components to create the outputs without using mental processes or human activities.

Turning to FIG. 3, the process (300) determines when to retrain a raster segmentation model of a raster digitization engine. The process (300) analyzes minority class segmentation to determine when to retrain a raster segmentation model. For example, the raster segmentation model generates multiple types of masks and determines when to retrain the raster segmentation model by analyzing one (i.e., a minority class segmentation) of the multiple types of masks, which may be a header mask. The process (300) may operate on computing systems as described with FIG. 12A and FIG. 12B.

Block 302 includes executing a raster segmentation model of the first stage of a raster segmentation model to generate multiple masks, which include a first header mask. The multiple masks may be different types of masks for different types of data in the different segments of the image of a document. For example, the image of the document may include segments with header items, log tracks (plot segments), depth tracks, *etc.* A mask may be generated for each different type of data. The different masks may be combined into a single data structure, such as by appending the masks to each other.

In an embodiment, executing the mask segmentation model of the first stage of the raster segmentation model includes tiling the image of the document into a set of image tiles that includes an image tile. The image of the document may be tiled into the image tiles by splitting the image into the image tiles (*i.e.,* sub images). The tiles may have a size suitable for processing by the models used by the system. The tiles may have a resolution that is smaller than the resolution of the image of the document.

In an embodiment, executing the mask segmentation model of the first stage of the raster segmentation model includes executing the mask segmentation model using an image tile to generate multiple mask tiles corresponding to the image tile. The mask tiles may include a header mask tile, a track area mask tile, and a depth track mask tile. The different types of mask tiles may be generated for each of the image tiles generated from the image of the document.

In an embodiment, executing the mask segmentation model of the first stage of the raster segmentation model includes executing a synthesis model to combine multiple header mask tiles into the first header mask, combine multiple track mask tiles into a track mask, and combine multiple depth track mask tiles into a depth track mask. In an embodiment, the tiles may be combined by appending the tiles together.

Block 305 includes executing a header mask segmentation model of a second stage of a raster segmentation model. The header mask segmentation model may operate to generate the second header mask from a header image tile.

In an embodiment, executing the header mask segmentation model of the second stage of the raster segmentation model includes processing the first header mask to generate a set of header image tiles centered with respect to a header identified in the first header mask. The header mask of an image of a document identifies the portion of the document that includes a header. The set of header image tiles may be generated from the portion of the image that includes the header (as identified by the first header mask) by cropping off the excess portions of the image so that the header is centered within at least one of the header image tiles. In an embodiment, the header image tiles may substantially overlap with 50% to 90% of the pixels between two of the header image tiles being the same.

In an embodiment, executing the header mask segmentation model of the second stage of the raster segmentation model includes executing the header mask segmentation model using a set of header image tiles to generate a set of second mask tiles corresponding to the set of header image tiles. The second header mask may be one of the set of second mask tiles.

Block 308 includes executing a segment comparison model using the first header mask with the second header mask to generate a comparison score. In an embodiment, executing the segment comparison model includes processing the first header mask with a set of second mask tiles to generate a set of operation values. In an embodiment, one of the second mask tiles corresponds to the second header mask. In an embodiment, an operation value of the set of operation values is one of an intersection over union value, an F1 score value, a DICE score values, *etc.* One operation value may be the intersection over union value between one of the second header masks and the first header mask. The values of the pixels in the mask may be a null value (*e.g.,* "0") and a mask value (*e.g.,* "1"). The intersection over union value may be determined by dividing the number of pixels in which both masks are set to the "1" value (the intersection value or logical AND value) by the number of pixels in which either of the masks are set to the "1" value (the union value or logical OR value). An operation value is generated for each of the second header masks.

In an embodiment, executing the segment comparison model includes combining a set of operation values to generate the comparison score. In an embodiment, combining the set of operation values includes averaging the set of operation values to form the comparison score for the document. The comparison score may also be calculated as the median value of the set of operation values.

In an embodiment, a comparison threshold *e.g.*, 0.93 on a scale of 0 to 1, may be used to generate the comparison score from the average of the set of operation values. When the average satisfies the threshold (*e.g*., is above the threshold), then the comparison score may be set to one (1) to indicate that the raster segmentation model is properly trained and may not be retrained. When the average does not satisfy the threshold, then the comparison score may be set to zero (0) to indicate that the raster segmentation model is not properly trained and is ready for retraining.

Block 310 includes generating a raster retraining score from the comparison score for a raster segmentation model of a raster digitization engine. In an embodiment, generating a raster retraining score includes combining a set of comparison scores for a data set to generate the raster retraining score. In an embodiment, the comparison scores may be combined by averaging (or finding the median of) the set of comparison scores to form the raster retraining score for the data set.

Block 312 includes retraining the raster segmentation model using the raster retraining score. In an embodiment, retraining the raster segmentation model includes retraining the raster segmentation model when the raster retraining score satisfies a raster retraining threshold. As an example, the raster retraining threshold may be 0.97 and the raster segmentation model may be retrained when the raster retraining score is below the raster retraining threshold.

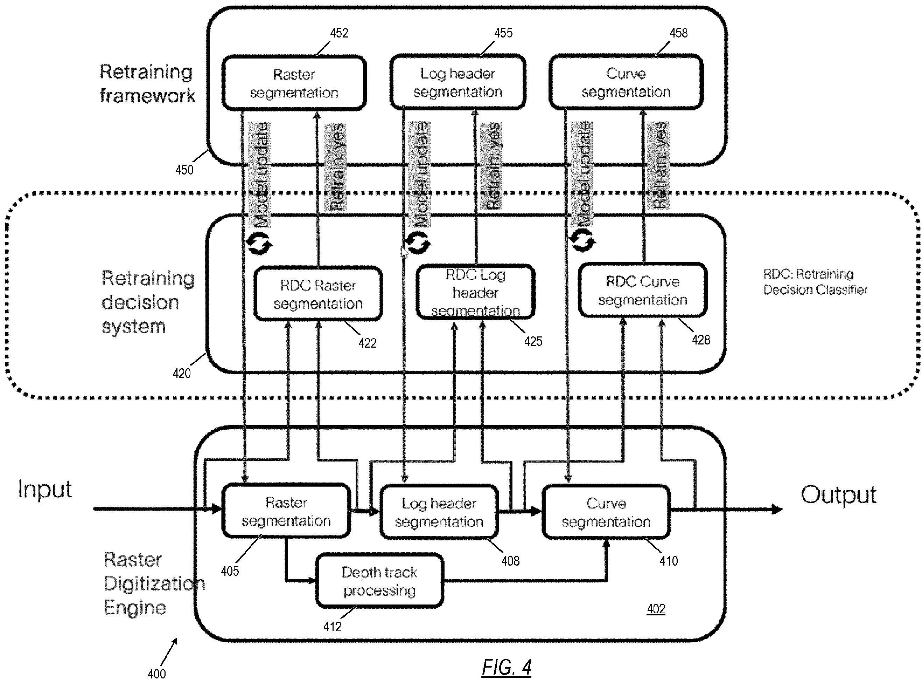

Turning to FIG. 4, the system (400) is a computing system with multiple components with memories and processors to store and execute data with instructions. The system (400) utilizes the components to process images to extract information using the raster digitization engine (402), determine whether to retrain the components of the raster digitization engine (402) with the retraining decision system (420), and retrain the components of the raster digitization engine (402) with the retraining framework (450).

The raster digitization engine (402) is a component of the system (400). The raster digitization engine (402) includes multiple components to process input images and extract data from the images as output. The images may be documents with multiple segments of data. The documents may be well logs with geophysical measurements and metadata within the segments. The raster digitization engine (402) includes the raster segmentation component (405), the log header segmentation component (408), the curve segmentation component (410), and the depth track processing component (412).

The raster segmentation component (405) is a raster segmentation model that includes one or more machine learning models. The raster segmentation component (405) receives input that includes an image used to generate output. The output may include masks for the different segments of data within the image, including masks for headers, track areas, and depth tracks, used by the log header segmentation component (408), the curve segmentation component (410), and the depth track processing component (412). The inputs and outputs to the raster segmentation component (405) may be inputs to the retraining decision classifier (RDC) of the raster segmentation component (422). The models of the raster segmentation component (405) may be replaced with the raster segmentation component (452) after being retrained by the retraining framework (450).

The log header segmentation component (408) is a header segmentation model that includes one or more machine learning models. The log header segmentation component (408) receives input that includes output from the raster segmentation component (405), which may be a mask that identifies a header segment of the initial input image. The log header segmentation component (408) outputs data extracted from a header of the image in which the header of the image is obtained using the header mask identified by the raster segmentation component (405). The inputs and outputs to the log header segmentation component (408) are inputs to the RDC log header segmentation component (425). The models of the log header segmentation component (408) may be replaced with the log header segmentation component (455) after being retrained by the retraining framework (450).

The curve segmentation component (410) is a curved segmentation model that includes one or more machine learning models. The curve segmentation component (410) receives input that includes output from the raster segmentation component (405), which may be a mask that identifies a curve segment of the initial input image. The curve segmentation component (410) outputs data extracted from a curve of the image using the track area mask identified by the raster segmentation component (405). The inputs and outputs to the curve segmentation component (410) are inputs to the RDC curve segmentation component (428). The models of the curve segmentation component (410) may be replaced with the curve segmentation component (458) after being retrained by the retraining framework (450).

The depth track processing component (412) receives output from the raster segmentation component (405) that may identify information within a depth track of the initial image. The output of the depth track processing component (412) maybe an input to the curve segmentation component (410).

The retraining decision system (420) is a component of the system (400). The retraining decision system (420) includes multiple components to determine when to retrain the models of the components of the raster digitization engine (402). The training decisions for the different components of the raster digitization engine (402) are executed and reached independently so that the models may be retrained individually instead of together to use fewer computational resources during training and retraining. The retraining decision system (420) includes the RDC raster segmentation component (422), the RDC log header segmentation component (425), and the RDC curve segmentation component (428).

The RDC raster segmentation component (422) is a component of the retraining decision system (420). The RDC raster segmentation component (422) receives inputs that are the inputs and outputs to the raster segmentation component (405). The RDC raster segmentation component (422) processes the input to generate output that is used to identify when to retrain the raster segmentation component (405). The output of the RDC raster segmentation component (422) is an input to the retraining framework (450) for the raster segmentation component (452).

The RDC log header segmentation component (425) is a component of the retraining decision system (420). The RDC log header segmentation component (425) receives inputs that are the inputs and outputs to the log header segmentation component (408). The RDC log header segmentation component (425) processes the input to generate output that is used to identify when to retrain the log header segmentation component (408). The output of the RDC log header segmentation component (425) is an input to the retraining framework (450) for the log header segmentation component (455).

The RDC curve segmentation component (428) is a component of the retraining decision system (420). The RDC curve segmentation component (428) receives inputs that are the inputs and outputs to the curve segmentation component (410). The RDC curve segmentation component (428) processes the input to generate output that is used to identify when to retrain the curve segmentation component (410). The output of the RDC curve segmentation component (428) is an input to the retraining framework (450) for the curve segmentation component (458).

The retraining framework (450) is a component of the system (400). The retraining framework (450) includes multiple components used to retrain the models used by the raster digitization engine (402). The retraining framework (450) may include the raster segmentation component (452), the log header segmentation component (455), and the curve segmentation component (458), which may be retrained versions of the components of the raster digitization engine (402).

The raster segmentation component (452) is a component of the retraining framework (450). The raster segmentation component (452) may be a retrained version of the raster segmentation component (405) of the raster digitization engine (402). The training of the raster segmentation component (452) may be triggered by the output from the RDC raster segmentation component (422) of the retraining decision system (420).

The log header segmentation component (455) is a component of the retraining framework (450). The log header segmentation component (455) may be a retrained version of the log header segmentation component (408) of the raster digitization engine (402). The training of the log header segmentation component (455) may be triggered by the output from the RDC log header segmentation component (425) of the retraining decision system (420).

The curve segmentation component (458) is a component of the retraining framework (450). The curve segmentation component (458) may be a retrained version of the curve segmentation component (410) of the raster digitization engine (402). The training of the curve segmentation component (458) may be triggered by the output from the RDC curve segmentation component (428) of the retraining decision system (420).

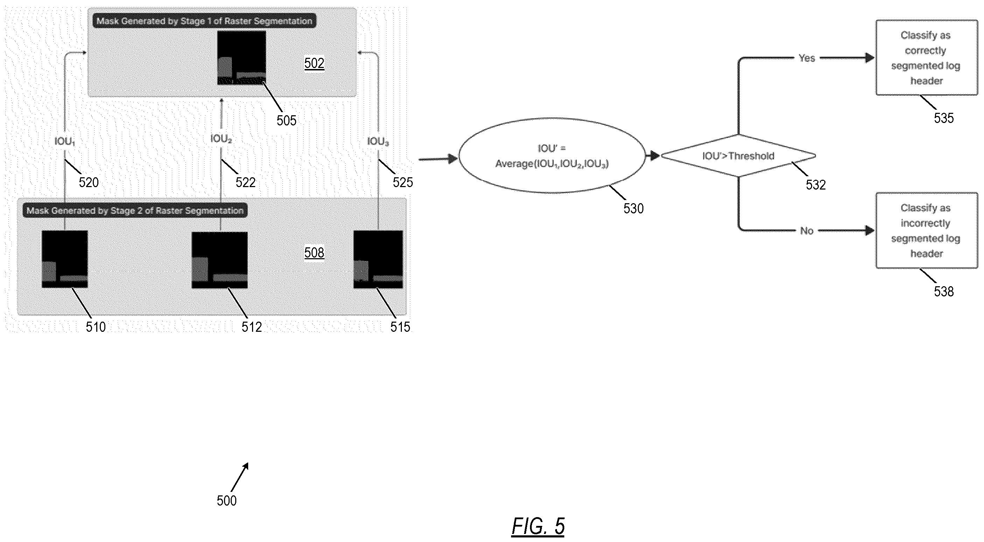

Turning to FIG. 5, the workflow (500) operates on a retraining decision system. The workflow (500) includes the Blocks 502 through 538 that perform steps of a process to generate information used to determine whether to retrain a raster segmentation component.

Block 502 includes generating a mask with a first stage of a raster segmentation component. The first stage generates the mask (505) that is a compilation of multiple masks for different segments of an image. One of the multiple masks is a header mask that identifies the location of one or more headers in the initial image.

Block 508 includes generating multiple second masks (510), (512), and (515) with a second stage of a raster segmentation component. The second stage may differ from the first stage in that the second stage generates the second masks (510), (512), and (515) for header items but not for other types of data. Each of the second masks (510), (512), and (515) may correspond to the same header items identified in the mask (502) from the first stage. Additionally, each of the second masks may be offset (horizontally or vertically) with respect to each other. An intersection over union operation is performed between each of the second masks (510), (512), and (515) and the mask (502) to form multiple intersection over union values.

Block 530 includes combining the multiple intersection over union values generated from the second masks (510), (512), and (515) and the mask (502). In an embodiment, the combination is an average of the multiple intersection over union values to form an average intersection over union value.

Block 532 includes applying a threshold to the average intersection over union value. When the average intersection over union value satisfies the threshold, then the workflow (500) proceeds to Block 535, otherwise, the workflow (500) proceeds to Block 538.

Block 535 includes classifying the output of the first and second segmentation stages as being correct. The output is correct when the mask from the first stage is sufficiently similar to the second stage masks such that, effectively, the methods used by the first stage and by the second stage of the header segmentation component agree on the location of the header items within the original image.

Block 538 includes classifying the output of the first and second segmentation stages as being incorrect. The output of the first and second segmentation stages is incorrect when the mask from the first stage is not sufficiently similar to the second masks, indicating that the methods used by the first and second stages disagree on the location of the header items within the original image.

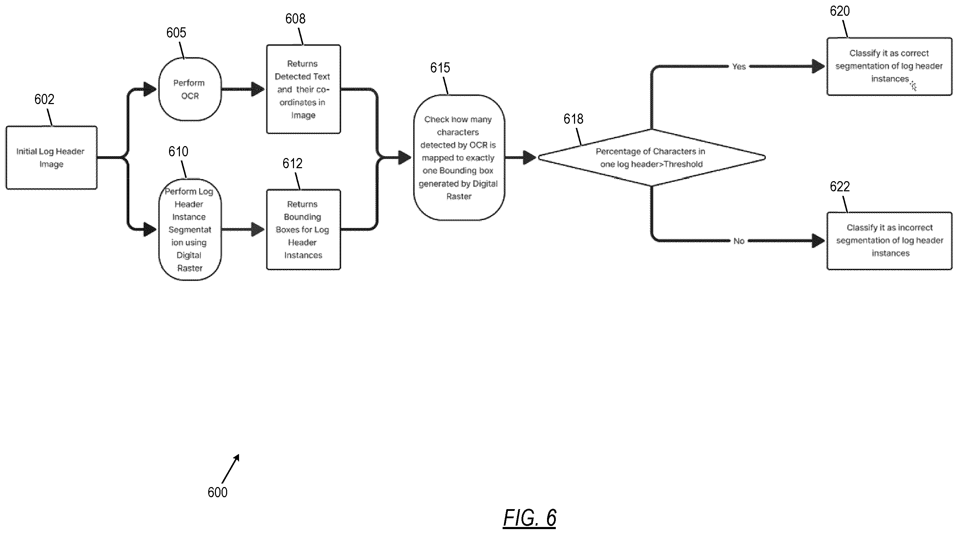

To FIG. 6, the workflow (600) illustrates an embodiment of a retraining decision system for determining when to retrain a header segmentation component. The workflow (600) includes the Blocks 602 through 622 that perform steps of a process to generate information used to determine whether to retrain a header segmentation component.

Block 602 includes receiving an initial header image, which may include a log header from a well log. The header image be extracted from a document, which may be a well log.

Block 605 includes performing optical character recognition (OCR) on the header image. The optical character recognition may include preprocessing, text recognition, and post processing.

Preprocessing processes the image prior to the performance of optical character recognition. Preprocessing may include noise reduction to remove noise from the header image, binarization to convert the image to a background color and a foreground color (*e.g.,* black and white), deskewing to correct a tilt of the header image, *etc.*

Text recognition may include pattern recognition and feature extraction. Pattern recognition compares the header image with a database of known characters to identify the characters within the header image. Feature extraction may identify features of each character, which may include lines, curves, intersections, *etc.,* to recognize the characters within the header image. Different types of algorithms may be used to perform text recognition, including mathematical algorithms and machine learning algorithms.

Post processing may improve the accuracy of the recognized text. Post processing may include contextual correction, spell checking, and grammar checking. Contextual correction may use a language model or dictionary to correct misrecognized words based on context. Spell checking may identify and correct spelling errors. Grammar checking may identify and correct errors with regards to grammatical rules.

Block 608 includes the output of Block 605, which is the output of the optical character recognition. The output of the optical character recognition may include the text recognized from the header image and the coordinates of the location of the text from within the header image.

Block 610 includes performing header instance segmentation, which may be performed with a header segmentation component. Execution of the header instance segmentation generates bounding boxes for the header items (which may be referred to as header instances) within the header image.

Block 612 includes the output of Block 610, which are the bounding boxes generated by the header segmentation component. The bounding boxes identify the location and size of the header items (also referred to as header instances) within the header image.

Block 615 includes determining the number of characters detected during the optical character recognition of Block 605 that are mapped to the location of a single bounding box detected at Block 610. The location of each character may be compared to the location of each bounding box to determine whether each character is within none, one, or multiple bounding boxes.

Block 618 includes comparing the percentage of characters that are in the bounding box of a single header item to a threshold. For example, a threshold of 0.98 would have that 98% of the characters recognized in the header image have one-to-one correspondence to a single bounding box of a single header item to satisfy the threshold. Each character may be in a single bounding box and each bounding box may include multiple characters. When satisfied, the process proceeds to Block 620. Otherwise, the process proceeds to Block 622.

Block 620 includes classifying the output as a correct segmentation. In other words, when the number of one-to-one correspondence from characters to single bounding boxes (instead of to multiple bounding boxes) is greater than (or equal to) the threshold, then the header segmentation component is executing with acceptable accuracy.

Block 622 includes classifying the output as an incorrect segmentation. In other words, when the number of characters that corresponds to one bounding box is less than the threshold, then the header segmentation component is not executing with acceptable accuracy since too many characters correspond with multiple bounding boxes for multiple header items.

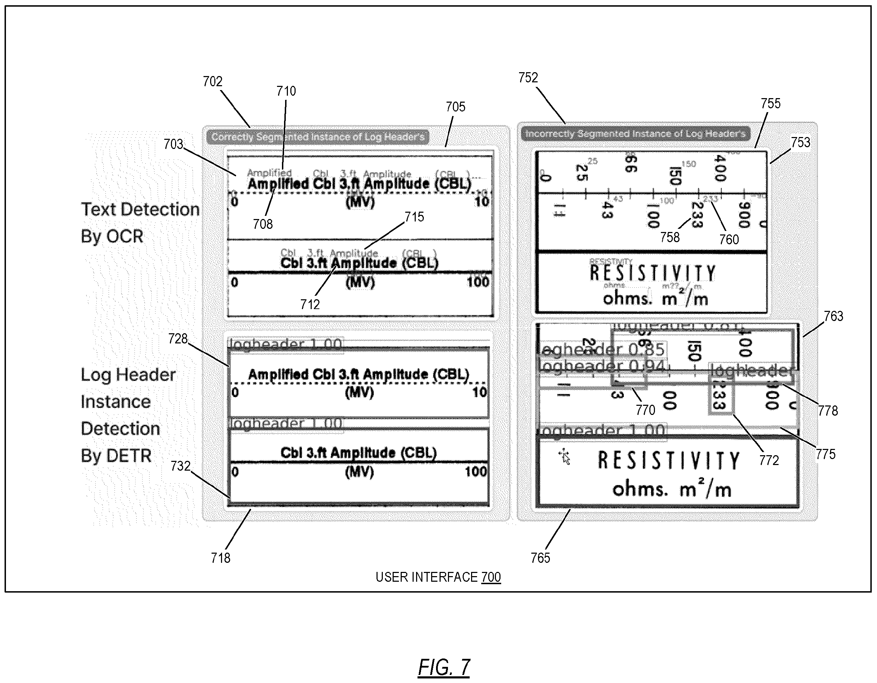

Turning to FIG. 7, the user interface (700) displays a correctly segmented instance in window (702) and an incorrectly segmented instance in window (752). The user interface (700) may be displayed to a developer during the training to provide verification of the training of the header segmentation components.

The window (702) displays a view of a correctly segmented initial image. The window (702) includes the header image (705) and the header image (718).

The header image (705) is displayed after being processed with optical character recognition. The header image (705) is modified from an initial image to include the recognized text (710), which was identified from the text (708). The header image (705) also includes the recognized text (715), which was identified from the text (712).

The header image (718) is displayed after being processed with a header segmentation component to identify the bounding boxes (728) and (732) within the header image (718). The header image (718) is modified from the same initial image as the header image (705) and is modified to display the bounding boxes (728) and (732). Each of the bounding boxes (728) and (732) were identified with a confidence of "1.00", which may be a maximum level of confidence.

The location of the text (708) is identified as within the bounding box (728) and the location of the text (712) is identified as being within the bounding box (732). Each of the text items of the initial image are identified as being within one of the header items to yield a correct segmentation of the header items of the initial image.

The window (752) displays a view of an incorrectly segmented second initial image. The window (752) includes the header image (755) and the header image (765).

The header image (755) is displayed after being processed with optical character recognition. The header image (755) is modified from a second initial image to include the recognized text (760), which was identified from the text (758).

The header image (765) is displayed after being processed with a header segmentation component to identify multiple bounding boxes, including the bounding boxes, (770), (772), (775), and (778). The header image (765) is modified from the same second initial image as the header image (755) (but which is different from the initial header image for the header images (705) and (718)). Some of the bounding boxes in the header image, (765) were identified with a less than maximum confidence. For example, the bounding box (770) was identified with a confidence of "0.85" and the bounding box (775) was identified with a confidence of "0.94".

The location of the text (758) is identified as within the bounding box (772) and the bounding box (775). Thus, each of the text items within the second initial image are not within a single bounding box to yield an incorrect segmentation of the header items of the second initial image.

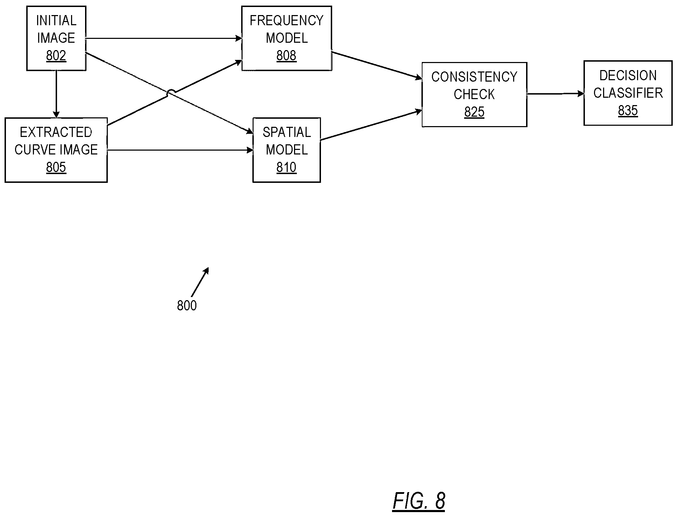

Turning to FIG. 8, the Workflow (8(800) processes the initial image (8(802) for a retraining decision for a curved segmentation component. The workflow (800) performs steps of a process to generate information used to determine whether to retrain a curve segmentation component.

The initial image (802) is an image that is processed with the workflow (800). The initial image (802) may be extracted from a document, such as a well log. The initial image (802) is an input to the frequency model (808) and the spatial model (810). The initial image (802) is also the image from which the extracted curve image (805) is generated.

The extracted curve image (805) may be generated from the initial image (802) with a curved segmentation model of a curved segmentation component. The extracted curve image (805) includes a curve from within the initial image (802) without other data from the initial image (802). The extracted curve image (805) is an input to the frequency model (808) and to the spatial model (810).

The frequency model (808) executes a process that compares the initial image (802) with the extracted curve image (805) to determine if the curve from the initial image (802) was successfully extracted into the extracted curve image (805). The frequency model (808) performs a frequency transformation onto each of the initial image (802) and the extracted curve image (805) to convert data from the images from a spatial domain to a frequency domain. The low frequency signals of the frequency domain versions of the images are then compared to determine if the curve segmentation model successfully extracted the curve from the initial image (802) into the extracted curve image (805). The output of the frequency model (808) is input to the consistency check (825).

The spatial model (810) executes a process that compares the initial image (802) with the extracted curve image (805) to determine if the curve from the initial image (802) was successfully extracted into the extracted curve image (805). In an embodiment, the spatial model (810) performs a grid removal process on the initial image (802) to remove a grid from the area of the initial image (802) where the curve is located. The gridless image is compared to the extracted curve image (805) to determine if the curve was successfully extracted from the initial image (802) by the curve segmentation model. The output from the spatial model (810) is input to the consistency check (825).

The consistency check (825) is a process that checks the consistency of the results from the frequency model (808) and the spatial model (810). The consistency check (825) may compare the results from the frequency model (808) to a frequency consistency threshold to determine if the curve was properly extracted. The consistency check (825) may compare the results from the spatial model (810) to a spatial consistency threshold to make another determination of whether the curve was properly extracted. The output of the consistency check (825) may be input to the classifier (835).

The decision classifier (835) is a process that classifies the result for the initial image (802) to determine whether the curve was properly extracted into the extracted curve image (805). In an embodiment, the decision classifier (835) may indicate that the extraction was successful when both the frequency model (808) and the spatial model (810) satisfied the thresholds within the consistency check (825).

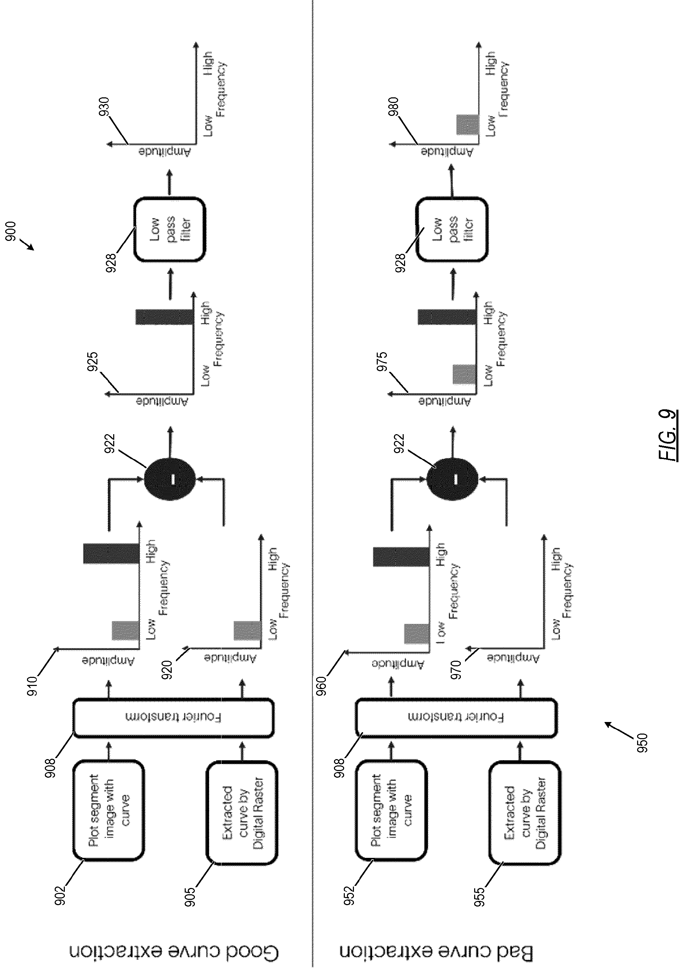

Turning to FIG. 9, workflow (900) illustrates the determination of a good curve extraction (which may be due to the curve segmentation model being properly trained) and workflow (950) illustrates the determination of a bad curve extraction (which may trigger retraining of the curve segmentation model). The workflows (900) and (950) perform steps of a process to generate information used to determine whether to retrain a curve segmentation component.

The initial image (902) is a plot segment image that includes a curve, which has been extracted from an image of a document. The extracted curve image (905) is an image with the curve that is extracted from the initial image (902) by the curve segmentation model of a raster digitization engine (also referred to as a digital raster).

The initial image (902) is input to the frequency transform (908), which performs a Fourier transform to generate the frequency signals displayed in the graph (910). The graph (910) indicates that the frequency signals from the initial image (902) include low frequency signals (corresponding to the curve) and high frequency signals (corresponding to a grid in the initial image).

The extracted curve image (905) is input to the frequency transform (908), which generates the graph (920), for simplicity one out of two dimensions of the Fourier transform is shown. That (920) indicates that the frequency signals from the extracted curve image (905) includes low frequency signals without high frequency signals.

The combination component (922) combines the frequency signals shown in the graph (910) (from the initial image (902)) with the frequency signals shown in the graph (920) (from the extracted curve image (905)). The combination component (922) subtracts these signals of the graph (920) from the signals of the graph (910) to generate the signals displayed in the graph (925).

The graph (925) illustrates the signals output from the combination component (922). The graph (925) illustrates the high frequency signals from the graph (910) remain and the low frequency signals from the graph (910) are due to the low frequency signals from the graph (920). The signals from the graph (925) are input to the low pass filter (928).

The low pass filter (928) processes the signals from the graph (925). The low pass filter (928) filters out the high frequency signals from the signals of the graph (925) to generate signals displayed in the graph (930).

The graph (930) illustrates the case where no signals are output from the low pass filter (928). The high frequency signals were removed by the low pass filter (928) and the low frequency signals were removed by subtracting the signals of the graph (920) from these signals of the graph (910). The lack of signals for the graph (930) indicates that the curve segmentation model properly extracted the curve from the initial image (902) into the extracted curve image (905).

Continuing with the workflow (950), the initial image (952) may be a different image than the initial image (902). The extracted curve image (955) is generated from the initial image (952) by the curve segmentation model to extract the curve from the initial image (952). The initial image (952) and the extracted curve image (955) are each input to the frequency transform (908) to respectively generate the signals illustrated in the graph (960) (for the initial image (952)) and the graph (970) (for the extracted curve image (955)), for simplicity one of the two dimensions of the Fourier transform is shown for each graph. The graph (960) indicates that the Fourier transform of the initial image (952) includes low frequency and high frequency signals. The graph (970) indicates that the Fourier transform of the extracted curve image (955) does not include low frequency signals (which may correspond to a curve) and does not include high frequency signals (which may correspond to other information, such as grid lines).

The signals of the graphs (960) and (970) are input to the combination component (922). The combination component (922) subtracts the signals of the graph (970) from the signals of the graph of (960) to generate the signals of the graph (975). The signals of the graph (975) include both low frequency signals and high frequency signals since the signals of the graph (970) did not include low frequency signals to subtract out the low frequency signals from the signals of the graph (960).

The signals of the graph (975) are input to the low pass filter (928). The low pass filter (928) processes the signals of the graph (975) to generate the signals of the graph (980).

The graph (980) illustrates the case where low frequency signals remain after the signals of the graph (975) are processed with the low pass filter (928). The presence of the low frequency signals for the signals of the graph (980) indicates that the curve segmentation model did not properly extract the curve from the initial image (952) when generating the extracted curve image (955) and may be retrained.

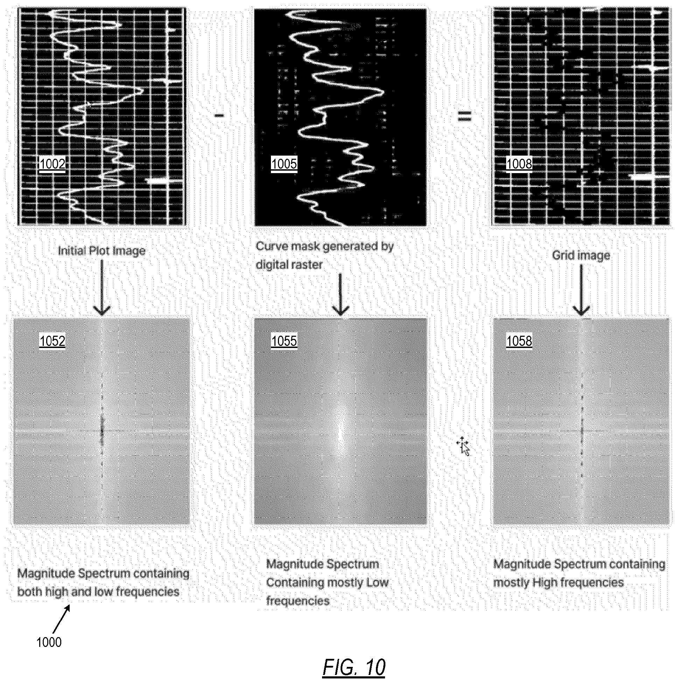

Turning to FIG. 10, the workflow (1000) illustrates operations performed on the images processed by the system. The operations may be used by components of the system to determine if the curve segmentation model is properly trained.

The initial image (1002) includes a curve and grid lines. The extracted curve image (1005) is a curve mask that includes the curve identified from the initial image (1002). Subtracting the extracted curve image (1005) from the initial image (1002) generates the grid image (1008), which contains the grid from the initial image (1002). The Images (1002), (1005), and (1008) are in the spatial domain.

The initial frequency spectrum (1052) is generated from the initial image (1002) with a frequency transform and may contain both low and high frequency signals. The curve frequency spectrum (1055) is generated from the extracted curve image (1005) with the frequency transform and may contain low frequency signals without high frequency signals. The curve frequency spectrum (1055) is subtracted from the initial frequency spectrum (1052) to generate the combined frequency spectrum (1058). The combined frequency spectrum (1058) may include high frequency signals without low frequency signals.

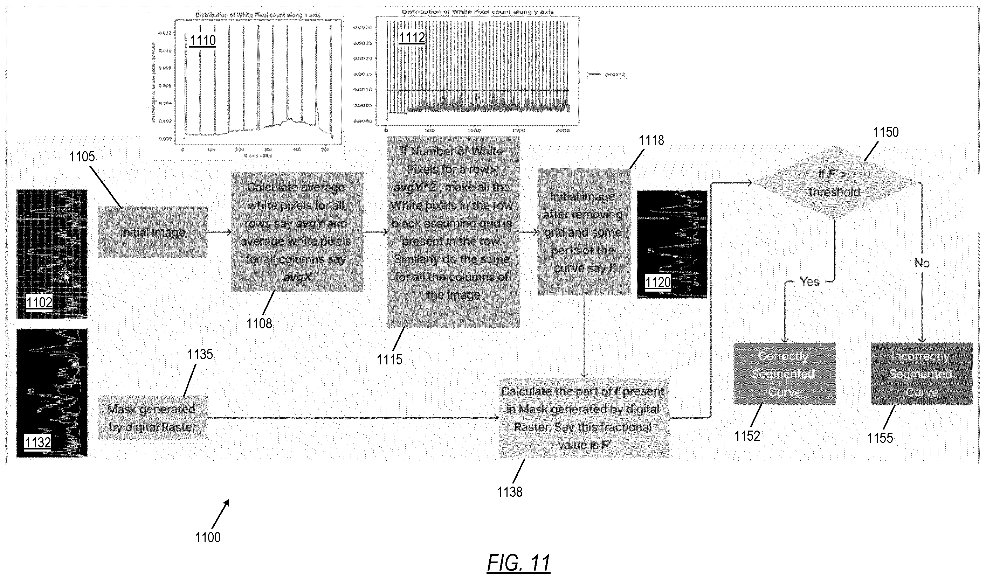

Turning to FIG. 11, the workflow (1100) processes the inputs and outputs of the curve segmentation model. The workflow (1100) processes the inputs and outputs to determine if the curve segmentation model is properly trained. The workflow (1100) utilizes multiple components.

Image (1102) is an image extracted from a document, which may be a well log. The initial image (1105) is a representation of the initial image (1102) that is input to the component (1108).

The component (1108) calculates the averages of the number of foreground pixels (*e.g.*, white pixels) in the rows of the initial image (1105) (referred to as "avgY") and calculates the averages of the number of foreground pixels in the columns of the initial image (1105) (referred to as "avgX"). The graph (1110) depicts the distribution of white pixels along the x axis for the initial image (1102), which when averaged identifies the value of "avgX". The graph (1112) depicts the distribution of white pixels along the y axis for the initial image (1102), which, when averaged, identifies the value of "avgY".

The component (1115) removes rows and columns of foreground pixels based on a comparison of the number of foreground pixels in a row or column to "avgY" or "avgX". As an example, if the number of foreground pixels in a row is greater than twice the value of "avgY" then the entire row of pixels may be set to the background color. Different multiples of the average number of foreground pixels may be used as the threshold.

The gridless image (1118) is the output from the component (1115). The gridless image (1120) is an illustration of the gridless image (1118). The gridless image (1118) is an input to the component (1138).

The extracted curve image (1132) is an image generated from the initial curve image (1102) by applying the mask (1135) (generated by a curve segmentation model of a raster digitization engine) to the initial image (1102). The extracted curve image (1132) is an input to the component (1138).

The component (1138) calculates the overlap between the gridless image (1118) and the extracted curve image (1132). In an embodiment, the overlap may be calculated as the intersection of the foreground pixels of the gridless image (1118) and the foreground pixels of the extracted curve image (1132).

The component (1150) compares the output of the component (1138) to a threshold. If the output from the component (1138) satisfies the threshold (*e.g*., is greater than the threshold), then the signal (1152) is triggered to indicate that the curve from the initial image (1102) was correctly extracted. If the output from the component (1138) does not satisfy the threshold (*e.g*., is not greater than the threshold), then the signal (1155) is triggered to indicate that the curve from the initial image (1102) was not correctly extracted. The signals (1152) and (1155) may be used in the determination of whether the curve segmentation model should be retrained.

Embodiments may be implemented on a special purpose computing system specifically designed to achieve the improved technological result. Turning to FIG. 12A and FIG. 12B, the special purpose computing system (1200) may include one or more computer processors (1202), non-persistent storage (1204), persistent storage (1206), a communication interface (1212) (*e.g*., Bluetooth interface, infrared interface, network interface, optical interface, *etc.*), and numerous other elements and functionalities that implement the features and elements of the disclosure. The computer processor(s) (1202) may be an integrated circuit for processing instructions. The computer processor(s) may be one or more cores or micro-cores of a processor. The computer processor(s) (1202) includes one or more processors. The one or more processors may include a central processing unit (CPU), a graphics processing unit (GPU), a tensor processing unit (TPU), combinations thereof, *etc.*

The input devices (1210) may include a touchscreen, keyboard, mouse, microphone, touchpad, electronic pen, or any other type of input device. The input devices (1210) may receive inputs from a user that are responsive to data and messages presented by the output devices (1208). The inputs may include text input, audio input, video input, *etc.,* which may be processed and transmitted by the computing system (1200) in accordance with the disclosure. The communication interface (1212) may include an integrated circuit for connecting the computing system (1200) to a network (not shown) (*e.g*., a local area network (LAN), a wide area network (WAN) such as the Internet, mobile network, or any other type of network), and/or to another device, such as another computing device.

Further, the output devices (1208) may include a display device, a printer, external storage, or any other output device. One or more of the output devices may be the same or different from the input device(s). The input and output device(s) may be locally or remotely connected to the computer processor(s) (1202). Many different types of computing systems exist, and the aforementioned input and output device(s) may take other forms. The output devices (1208) may display data and messages that are transmitted and received by the computing system (1200). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (1200) in FIG. 12A may be connected to or be a part of a network. For example, as shown in FIG. 12B, the network (1220) may include multiple nodes (*e.g.,* node X (1222), node Y (1224)). Each node may correspond to a computing system, such as the computing system shown in FIG. 12A, or a group of nodes combined may correspond to the computing system shown in FIG. 12A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (1200) may be located at a remote location and connected to the other elements over a network.

The nodes (*e.g.,* node X (1222), node Y (1224)) in the network (1220) may be configured to provide services for a client device (1226), including receiving requests and transmitting responses to the client device (1226). For example, the nodes may be part of a cloud computing system. The client device (1226) may be a computing system, such as the computing system shown in FIG. 12A. Further, the client device (1226) may include and/or perform all or a portion of one or more embodiments of the disclosure.

The computing system of FIG. 12A may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown as well as how data is presented to a user. Furthermore, the GUI may present data directly to the user, *e.g*., data presented as actual data values through text, or rendered by the computing device into a visual representation of the data, such as through visualizing a data model.

As used herein, the term "connected to" contemplates multiple meanings. A connection may be direct or indirect (*e.g.*, through another component or network). A connection may be wired or wireless. A connection may be temporary, permanent, or semi-permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (*e*.*g*., first, second, third, *etc.*) may be used as an adjective for an element (*i.e.,* any noun in the application). The use of ordinal numbers is not to imply or create any particular ordering of the elements, nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

1. A method comprising:
executing a raster segmentation model for a first stage to generate a plurality of masks comprising a first header mask;
executing a header mask segmentation model for a second stage to generate a second header mask;
executing a segment comparison model using the first header mask with the second header mask to generate a comparison score;
generating a raster retraining score from the comparison score for the raster segmentation model of a raster digitization engine; and
retraining the raster segmentation model using the raster retraining score.

2. The method of claim 1, wherein executing the raster segmentation model of the first stage of the raster segmentation model comprises:
tiling an image into a set of image tiles comprising an image tile.

3. The method of claim 1 or 2, wherein executing the raster segmentation model of the first stage of the raster segmentation model comprises:
executing the raster segmentation model using an image tile to generate a plurality of mask tiles corresponding to the image tile, wherein the plurality of mask tiles comprises a header mask tile, a track mask tile, and a depth track mask tile.

4. The method of any of the preceding claims, wherein executing the raster segmentation model of the first stage of the raster segmentation model comprises:
executing a synthesis model to combine a plurality of header mask tiles, comprising a header mask tile, into the first header mask, combine a plurality of track mask tiles, comprising a track mask tile, into a track mask, and combine a plurality of depth track mask tiles, comprising a depth track mask tile, into a depth track mask.

5. The method of any of the preceding claims, wherein executing the header mask segmentation model of the second stage of the raster segmentation model comprises:
processing the first header mask to generate a set of header image tiles centered with respect to a header identified in the first header mask.

6. The method of any of the preceding claims, wherein executing the header mask segmentation model of the second stage of the raster segmentation model comprises:
executing a header raster segmentation model using a set of header image tiles to generate a set of second mask tiles corresponding to the set of header image tiles, wherein the second header mask corresponds to a second mask tile of the set of second mask tiles.

7. The method of any of the preceding claims, wherein executing the segment comparison model comprises:
processing the first header mask with a set of second mask tiles to generate a set of
operation values,
wherein a second mask tile of the set of second mask tiles corresponds to the second header mask, and
wherein an operation value of the set of operation values is one of an intersection over union value, an Fl score value, and a DICE score value.

8. The method of any of the preceding claims, wherein executing the segment comparison model comprises:
combining a set of operation values to generate the comparison score, wherein combining the set of operation values comprises averaging the set of operation values.

9. The method of any of the preceding claims, wherein generating the raster retraining score comprises:
combining a set of comparison scores, comprising the comparison score, for a data set to generate the raster retraining score.

10. The method of any of the preceding claims, wherein retraining the raster segmentation model comprises:
retraining the raster segmentation model when the raster retraining score satisfies a raster retraining threshold, wherein the raster retraining threshold is 0.9 and the raster segmentation model is retrained when the raster retraining score is below the raster retraining threshold.

11. A system comprising
at least one processor; and
an application that, when executing on the at least one processor, performs operations comprising the steps of the method according to any of the preceding claims.

12. A non-transitory computer readable medium comprising instructions executable by at least one processor to perform operations comprising the steps of the method of any of the claims 1-10.
